# EUROPÄISCHE PATENTSCHRIFT

(11) **EP 1 837 507 B1**
(45) Veröffentlichungstag und Bekanntmachung des Hinweises auf die Patenterteilung: **13.08.2008**
(21) Anmeldenummer: 06006061.3
(22) Anmeldetag: 24.03.2006
(51) Int. Cl.: F02D 11/10, F02D 41/02

(54) **Verfahren zum Betrieb eines Antriebsaggregates eines Kraftfahrzeugs und Steuerungseinheit für ein solches Antriebsaggregat**
Method for operating a drive unit of a vehicle and control unit thereof
Procédé de commande d'un groupe d'entrainement d'un véhicule et unité de contrôle associée

(43) Veröffentlichungstag der Anmeldung: 26.09.2007
(73) Patentinhaber: Delphi Technologies, Inc., Troy, MI 48007 (US)
(72) Erfinder: Arkenbosch, Herald F., 54680 Errouville (FR)
(74) Vertreter: ten Brink, Carsten

(56) Entgegenhaltungen:
- EP-A- 0 728 921
- WO-A-00/03888
- DE-A1- 4 306 086
- DE-A1- 10 114 273
- DE-A1- 10 134 124

## Beschreibung

Die Erfindung betrifft ein Verfahren zum Betrieb eines Antriebsaggregats eines Kraftfahrzeugs sowie eine Steuerungseinheit für ein solches Antriebsaggregat. Des Weiteren betrifft die Erfindung eine durch einen Computer ausführbare Implementierung des Verfahrens.

Einem Antriebsaggregat für ein Kraftfahrzeug oder dem Kraftfahrzeug insgesamt ist in an sich bekannter Art eine Steuerungseinheit zugeordnet und die Steuerungseinheit erfasst, neben gegebenenfalls einer Ausführung einer Vielzahl anderer Funktionen, zumindest eine Position eines Stellelementes und ein Maß für eine Momentangeschwindigkeit des Kraftfahrzeugs, im folgenden kurz als Geschwindigkeitsmaß bezeichnet. Als Geschwindigkeitsmaß kommt dabei insbesondere eine Motor- und/oder Getriebedrehzahl, ein Kupplungsschlupfverhältnis oder dergleichen in Betracht.

Als Stellelement kommt dabei insbesondere das Gaspedal oder ein vergleichbares Betätigungselement und/oder ein Ausgang einer Geschwindigkeitsregelungseinrichtung, der so genannte Tempomat, der gegebenenfalls zusammen mit dem Verfahren in Software in der Steuerungseinheit implementiert ist, in Betracht.

In einem der Steuerungseinheit zugeordneten Speicher ist zumindest eine Relation zwischen der Position des Stellelements und dem Geschwindigkeitsmaß einerseits und einem Maß für eine vom Aggregat abgegebene oder abgebbare Leistung andererseits hinterlegt. Damit wird bei einem Gaspedal als Stellelement nicht direkt dessen Position an einen Vergaser, eine Einspritzanlage oder dergleichen weitergegeben, sondern in Ansehung der Position des Gaspedals und in Ansehung des jeweiligen Geschwindigkeitsmaßes ein diesen beiden Arbeitspunkten durch die Relation, also z.B. eine so genannte Look-up Table, zugeordneter Wert ausgewählt und dieser Wert direkt oder indirekt zum Abruf der Leistung des Aggregats verwendet. Hintergrund dieser bekannten Maßnahmen ist, dass mit solchen Relationen das Ansprechverhalten des Aggregats in Bezug auf Benutzereingaben (Fahreraktionen), also z.B. Betätigungen des Gaspedals, an unterschiedliche Betriebszustände, also z.B. unterschiedliche Momentangeschwindigkeiten oder unterschiedliche Motordrehzahlen, anpassbar ist.

Die gattungsgemäße EP 0 728 921 beschreibt ein System zur Kontrolle eines Motoroutputs eines Fahrzeugs. Dabei wird ein gewünschtes AntriebswellenDrehmoment auf Basis eines Gaspedal Öffnungsgrades und einer Fahrzeuggeschwindigkeit berechnet. Bei einer Beschleunigung des Fahrzeugs wird ein gewünschtes Motor-Drehmoment zur Erzeugung eines gewünschten Antriebswellen-Drehmoments berechnet und ein gewünschter "throttle opening" Grad für das gewünschte Motor-Drehmoment bestimmt. Bei einer Verzögerung des Fahrzeugs wird der gewünschte "throttle opening" Grad über einen Gaspedal Öffnungsgrad, bei welchem das Antriebswellen-Drehmoment Null ist, und einen "throttle opening" Grad, bei welchem das Motor-Drehmoment Null ist, bestimmt.

Eine Motorsteuereinrichtung, welche eine Drehmomentprofil-Speichereinrichtung für die Speicherung von Soll-Antriebswellendrehmomentprofilen für mehrere Fahrzeugumgebungsbedingungen umfasst, die von einem Gaspedalstellwert und von einer Fahrzeuggeschwindigkeit abhängen, ist in der DE 43 06 086 beschrieben. Dabei erkennt eine Fahrzeugumgebungsbedingungs-Erkennungseinrichtung verschiedene Fahrzeugumgebungsbedingungen, um aus den in der Drehmomentprofil-Speichereinrichtung gespeicherten mehreren Soll-Antriebswellendrehmomentprofilen ein geeignetes Soll-Antriebswellendrehmomentprofil auszuwählen. Eine Soll-Antriebswellendrehmoment-Berechnungseinrichtung bestimmt ein Soll-Antriebswellendrehmoments aus dem gewählten Soll-Antriebswellendrehmomentprofil, dem erfassten Gaspedalstellwert und der erfassten Fahrzeuggeschwindigkeit. Eine Motorausgangsleistungs-Steuerwert-Berechnungseinrichtung dient der Bestimmung eines Motorausgangsleistungs-Steuerwertes, bei dem eine Fahrzeugantriebswelle das Soll-Antriebswellendrehmoment erzeugt, sowie der Ausgabe des be stimmten Motorausgangsleistungs-Steuerwertes an die Motorausgangsleistungs-Steuereinrichtung.

Darüber hinaus ist im Stand der Technik auch bereits bekannt, mit solchen Relationen unterschiedlichen Vorlieben des jeweiligen Fahrers in Bezug auf das Ansprechverhalten des Antriebsaggregats bei Betätigung des Gaspedals Rechnung zu tragen. In diesem Zusammenhang sind Betriebsartenwahlschalter bekannt, mit denen z.B. ein sportliches Ansprechverhalten oder ein eher kraftstoffsparendes Ansprechverhalten des Antriebsaggregates auswählbar ist.

Nachteilig bei den im Stand der Technik bekannten Verfahren ist jedoch die vergleichsweise aufwendige Handhabung der zugrunde liegenden oder zugrunde zu legenden Daten, also z.B. der oben genannten Relationen. Dabei hat sich insbesondere als nachteilig herausgestellt, dass für unterschiedliche Betriebszustände eine eigene Relation im Speicher vorzuhalten ist und im Betrieb des Antriebsaggregates je nach Betriebszustand anzuwenden ist. Ein Betriebszustand ist dabei z.B. durch die Stellung eines Betriebsartenwahlschalters oder dergleichen und/oder eine Fahrstufe, also ein Übersetzungsverhältnis des Getriebes, vorgegeben. Dies hat neben dem damit verbundenen Speicherbedarf und dem erhöhten Programmieraufwand im Zusammenhang mit der geeigneten Auswahl der jeweils anzuwendenden Relation vor allem den Nachteil, dass die einzelnen Relationen aufeinander abgestimmt sein müssen um für den Fahrer in jeder Fahrstufe ein annähernd gleiches oder zumindest ein mit einem "Basisansprechverhalten" und der jeweiligen Fahrstufe korreliertes Ansprechverhalten zu erhalten.

Eine Aufgabe der Erfindung besteht entsprechend darin, dem oben beschriebenen Nachteil abzuhelfen oder diesen zumindest zu verringern.

Erfindungsgemäß ist in diesem Zusammenhang bei einem Verfahren zum Betrieb eines Antriebsaggregats gemäß dem Oberbegriff des Anspruchs 1 vorgesehen, dass für mindestens zwei unterschiedliche Betriebszustände des Aggregats ein und dieselbe Relation zugrunde gelegt wird und dass je nach Betriebszustand eine Skalierung der den mindestens zwei unterschiedlichen Betriebszuständen gemeinsam zugrunde liegenden Relation erfolgt.

Der Vorteil der Erfindung liegt darin, dass, wo gemäß dem Stand der Technik für mindestens zwei unterschiedliche Betriebszustände, also z.B. zwei unterschiedliche Fahrstufen, zwei separate Relationen erforderlich waren, jetzt nur noch eine Relation zugrunde gelegt wird und dass eine Anpassung an die unterschiedlichen Betriebszustände im Wege einer Skalierung der Relation erfolgt.

Wenn sich also z.B. die unterschiedlichen Betriebszustände auf ein erstes und ein zweites Unter- oder Übersetzungsverhältnis des Getriebes beziehen, also z.B. einen ersten Betriebszustand bei einem eingelegten "niedrigen" Gang und einen weiteren Betriebszustand bei eingelegtem "hohen" Gang, erfolgt bei der durch den niedrigen Gang bestimmten Fahrstufe beispielsweise eine erste Skalierung der den und ggf. weiteren Betriebszuständen gemeinsam zugrunde liegenden Relation, insbesondere mit einem ersten multiplikativen Faktor, und bei dem durch den hohen Gang bestimmten weiteren Betriebszustand eine weitere Skalierung, insbesondere mit einem zweiten multiplikativen Faktor.

Wenn sich die insbesondere multiplikative Skalierung auf die Position des Stellelements und/oder das Geschwindigkeitsmaß bezieht, kann entweder der Einfluss der Position des Stellelements oder des Geschwindigkeitsmaßes auf das Ansprechverhalten oder auch der Einfluss beider Parameter in Kombination variiert werden. So kann z.B. vorgesehen sein, dass in einem niedrigen Gang am Gaspedal ein größerer Weg erforderlich ist um eine bestimmte Beschleunigung zu erreichen als dies bei einem hohen Gang erforderlich ist. Dies ist z.B. durch eine multiplikative Skalierung, die sich auf die Position des Stellelements bezieht, erreichbar.

Vorteilhaft kann vorgesehen sein, dass sich eine solche insbesondere multiplikative Skalierung in Abhängigkeit von der Position des Stellelements und/oder dem Geschwindigkeitsmaß ändert, so dass sich unterschiedliche Skalierungen nicht nur je nach Betriebszustand sondern innerhalb ein und desselben Betriebszustands auch je nach Wert (Arbeitspunkt oder Arbeitsbereich) der jeweiligen Eingangsparameter, also z.B. Stellelementposition und/oder Geschwindigkeitsmaß, ergeben.

Die jeweilige Skalierung oder auch eine in Bezug auf bestimmte Arbeitspunkte oder Arbeitsbereiche unterschiedliche Skalierung kann auch adaptiv ausgeführt sein, so dass sich abhängig von einer mittels der Steuerungseinheit durchführbaren Überwachung des Fahrverhaltens des Nutzers des Kraftfahrzeugs eine Veränderung der jeweiligen Skalierungen einstellt.

Besonders bevorzugt ist vorgesehen, dass die Relation und die jeweilige Skalierung in gleichsam umgekehrter Reihenfolge wie bei der Ermittlung einer abzurufenden Leistung angewandt werden um eine Sollposition des Stellelements zu ermitteln. Diese Funktionalität ist insbesondere dann relevant, wenn das Kraftfahrzeug mit einer Geschwindigkeitsregelungseinrichtung, also z.B. einem Tempomat, ausgestattet ist und mittels des Tempomats eine bestimmte Sollgeschwindigkeit eingestellt ist. Auch wenn der Tempomat die Geschwindigkeit des Kraftfahrzeugs im Wesentlichen konstant hält, erwartet der Fahrer jederzeit die Kontrolle über das Fahrzeug z.B. insofern übernehmen zu können, dass er das Fahrzeug durch zusätzliches Betätigen des Gaspedals beschleunigt. Dazu ist einerseits, insbesondere zur Vermeidung von Irritationen auf Seiten des Fahrers, erforderlich, dass sich das Gaspedal in einer Position befindet, die zumindest näherungsweise der Position entspricht, die sich für das Gaspedal ergibt, wenn der Fahrer das Fahrzeug durch eigene Betätigung des Gaspedals bei der eingestellten Geschwindigkeit bewegen würde. Wenn sich das Gaspedal in einer solchen Position befindet, kann der Fahrer durch zusätzliches Betätigen des Gaspedals eine Geschwindigkeitssteigerung herbeiführen. Wenn sich das Gaspedal dagegen nicht in der vom Fahrer erwarteten Position befindet, betätigt der Fahrer entweder das Gaspedal zu stark, so dass tatsächlich eine Leistung in einem Maße bei dem Aggregat abgerufen wird, die vom Fahrer gar nicht beabsichtigt war oder das Gaspedal befindet sich in einer Position, in der bis zu einer Endlage nur noch vergleichsweise wenig Weg zur Verfügung steht und der vom Fahrer beabsichtigte Leistungsabruf nicht mehr zur Verfügung steht.

Zusätzlich oder alternativ kann vorgesehen sein, dass nicht so sehr auf die tatsächliche Position des (realen) Gaspedals abgestellt wird, sondern dass zusätzlich noch ein "virtuelles Gaspedal" und/oder die Stellung eines solchen virtuellen Gaspedals z.B. durch die Steuerungseinheit verwaltet wird, wobei sich aus einer solchen Stellung des virtuellen Gaspedals Schaltpunkte für das Getriebesteuergerät ergeben. Dann kann - wie oben beschrieben - vorgesehen sein, dass die Relation und die jeweilige Skalierung in gleichsam umgekehrter Reihenfolge wie bei der Ermittlung einer abzurufenden Leistung angewandt werden um eine Stellung des virtuellen Gaspedals zu ermitteln. Mit dieser Information ist die Ansteuerung des Getriebesteuergerätes in optimaler Art und Weise möglich.

Die Erfindung erfasst neben dem oben beschriebenen Verfahren zum Betrieb des Antriebsaggregats eines Kraftfahrzeugs auch eine Implementation des Verfahrens in einer durch einen Computer ausführbaren Form, also insbesondere in Software. Darüber hinaus erfasst die Erfindung auch eine zur Ausführung des Verfahrens geeignete und vorgesehene Steuerungseinheit, die dazu insbesondere Mittel zur Erfassung zumindest einer Position des Stellelements und des Geschwindigkeitsmaßes sowie Mittel zum Abruf einer Leistung des Aggregats in Abhängigkeit von einer Position des Stellelements und/oder dem Geschwindigkeitsmaß anhand der im Speicher hinterlegten Relation sowie Mittel zum Abruf der Leistung für mindestens zwei unterschiedliche Betriebszustände aufgrund ein und derselben Relation auf Basis einer Skalierung der Relation in Abhängigkeit vom jeweiligen Betriebszustand umfasst. Weitere Mittel, also insbesondere Softwaremittel, sind zur Implementierung der oben beschriebenen Ausgestaltungen des Verfahrens vorgesehen.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: in schematisch vereinfachter Form ein Antriebsaggregat eines Kraftfahrzeugs,
- Fig. 2: eine schematisch vereinfachte Darstellung einer Relation zum Abruf einer Leistung bei dem Abtriebsaggregat,
- Fig. 3: eine schematisch vereinfachte Darstellung zur Skalierung einer Relation und
- Fig. 4: eine Situation bei einer Ausführungsform, bei der die Skalierung selbst eine Funktion zumindest einer Variablen ist.

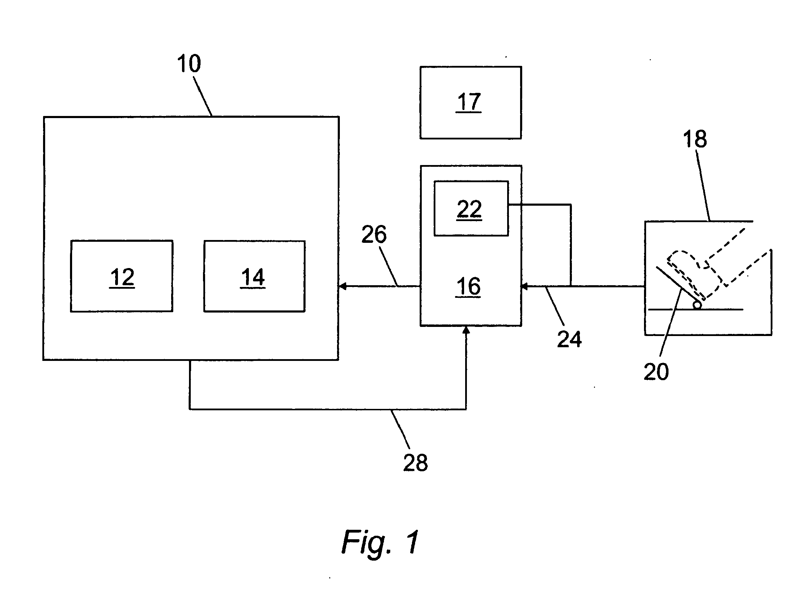

Fig. 1 zeigt in schematisch vereinfachter Form ein Antriebsaggregat 10 eines nicht näher dargestellten Kraftfahrzeugs, das einerseits einen Motor 12, also z.B. einen Verbrennungsmotor, und ein Getriebe 14 umfasst. Dem Antriebsaggregat 10 oder dem Kraftfahrzeug insgesamt ist eine Steuerungseinheit 16 mit einer Zugriffsmöglichkeit auf einen Speicher 17 zugeordnet. Diese übernimmt, neben evtl. weiteren Funktionen, eine Ansteuerung des Antriebsaggregats 10 in Abhängigkeit von Fahreraktionen.

Eine Fahreraktion kann dabei beispielsweise über eine Position eines als Stellelement 18 für das Antriebsaggregat 10 fungierenden Gaspedals 20 vorliegen. Ein weiteres Stellelement 22 zum Abruf einer Leistung bei dem Aggregat 10 kann eine Geschwindigkeitsregelungseinrichtung, also z.B. ein so genannter Tempomat 22, sein, der insbesondere als Bestandteil der Steuerungseinheit 16 ausgeführt, also z.B. in Software implementiert ist. Die Steuerungseinheit 16 gibt ein von dem jeweiligen Stellelement 18, 22 erhaltenes Stellsignal 24 entweder direkt oder indirekt, also nach einer zusätzlichen Verarbeitung, an das Antriebsaggregat 10 zum Abruf einer Leistung entsprechend dem Stellsignal 24 weiter. Im dargestellten Beispiel erfolgt der Leistungsabruf aufgrund eines aus dem Stellsignal 24 abgeleiteten Aktivierungssignals 26. Für eine solche Verarbeitung kann auch ein durch Überwachung des Aggregats 10 erhältlicher Istwert herangezogen werden, der z.B. ein Maß für eine Momentangeschwindigkeit des Kraftfahrzeugs - Geschwindigkeitsmaß 28 - liefert, also z.B. die Momentangeschwindigkeit oder eine Drehzahl des Motors 12.

Moderne Geschwindigkeitsregelungseinrichtungen regeln die Fahrzeuggeschwindigkeit durch Beeinflussung des jeweils zur Sollgeschwindigkeit gehörigen Solldrehmoments des Antriebsaggregats. Eine Position des Gaspedals 20 ergibt sich aus einem solchen Regelungsvorgang nicht. Mit der Erfindung kann allerdings - wie oben beschrieben - durch, im Gegensatz zur Ermittlung einer abzurufenden Leistung, gleichsam umgekehrte Reihenfolge bei der Anwendung der Relation und/oder der jeweiligen Skalierung die zugehörige Position des Gaspedals ermittelt werden, die dann insbesondere auch zur geeigneten Ansteuerung eines Getriebesteuergerätes verwendbar ist.

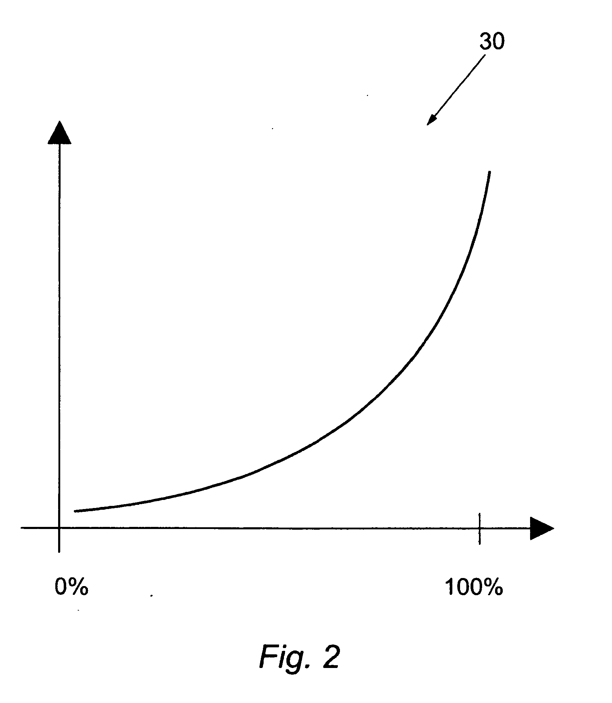

Zur Verarbeitung des Stellsignals 24 durch die Steuerungseinheit 16 ist im Stand der Technik die Zugrundelegung vorgebbarer oder vorgegebener Relationen 30 vorgesehen. Eine schematisch vereinfachte Darstellung dazu ist in Fig. 2 angegeben. Dabei ist exemplarisch auf der Abszisse von 0 bis 100% eine Position eines Stellelements 18, 22 (Fig. 1), also z.B. des Gaspedals 20 (Fig. 1), abgetragen. Über der Ordinate ergibt sich das Aktivierungssignal 26 (Fig. 1). Im Ergebnis führt die exemplarisch dargestellte Relation 30 dazu, dass bei anfänglicher Betätigung des Gaspedals 20 ein vergleichsweise großer Weg erforderlich ist, um eine Geschwindigkeitssteigerung zu bewirken und dass mit zunehmender Betätigung des Gaspedals 20 der Weg, der zum Abruf weiterer Beschleunigung erforderlich ist, abnimmt. Solche Relationen 30 sind im Stand der Technik auch in Abhängigkeit von einem weiteren Eingangsparameter, also z.B. dem Geschwindigkeitsmaß 28 realisiert. Auf eine graphische Darstellung einer solchen in einem dreidimensionalen Koordinatensystem darzustellenden Relation wird aus Gründen der Übersichtlichkeit verzichtet.

Im Stand der Technik ist für unterschiedliche Betriebszustände des Antriebsaggregats 10, die sich z.B. aufgrund unterschiedlicher Fahrstufen des Getriebes 14 ergeben, jeweils eine eigene, dem jeweiligen Betriebszustand zugeordnete Relation 30 vorgesehen.

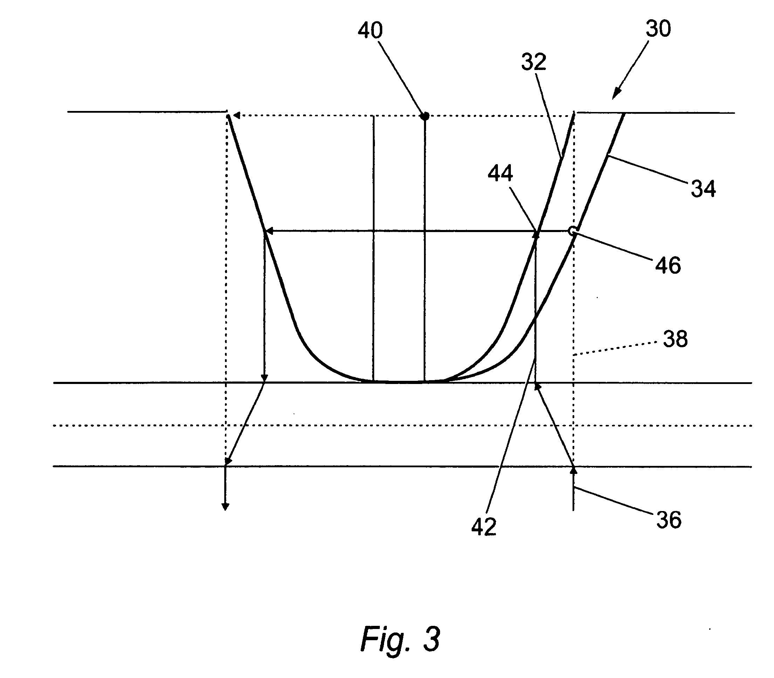

Zur Vermeidung der damit verbundenen Nachteile schlägt die Erfindung vor, für mindestens zwei unterschiedliche Betriebszustände des Aggregats 10 ein und dieselbe Relation 30 zugrunde zu legen, wobei je nach Betriebszustand eine Skalierung der Relation 30 erfolgt. Dies wird schematisch vereinfacht nachfolgend anhand von Fig. 3 verdeutlicht, wobei Fig. 3 die Darstellung in Fig. 2 zumindest teilweise aufgreift. Entsprechend ist auf der Abszisse eine Position des Gaspedals 20 als Beispiel für ein Stellelement 18, 22 abgetragen. Über der Ordinate ergibt sich die beim Aggregat 10 abgerufene Leistung also das Aktivierungssignal 26 oder ein Maß für das Aktivierungssignal 26, z.B. in Form eines abgerufenen Drehmoments. Als Relation 30 sind dabei zwei Parabeläste 32, 34 dargestellt, wobei die parabolische Form willkürlich gewählt ist und anstelle einer parabolischen Form z.B. auch ein Graph eines Polynoms höherer Ordnung zugrunde gelegt werden kann. Für die nachfolgende Erläuterung wird davon ausgegangen, dass ein erster Parabelast 32 eine Repräsentation einer in dem der Steuerungseinheit 16 zugeordneten Speicher 17 (Fig. 1) hinterlegten Relation 30 ist.

Ein erster aufwärts gerichteter vertikaler, durchgezogener Pfeil 36 gibt eine Position des Gaspedals 20 an. Bei direkter Zugrundelegung dieser Position ergibt sich das beim Antriebsaggregat 10 abgerufene Drehmoment anhand des vertikal aufwärts gerichteten gestrichelten Pfeils 38, einem damit referenzierten Arbeitspunkt auf dem Parabelast 32 und einem wiederum damit korrelierten Wert 40 der Ordinate. Diese Vorgehensweise entspricht der Zugrundelegung jeweils einer Relation 30 für jeweils einen Betriebszustand des Antriebsaggregats 10. Für einen weiteren Betriebszustand, also z.B. eine anderen Fahrstufe, ist gemäß der Erfindung eine Skalierung der Relation 30 vorgesehen, die z.B. dadurch vorgenommen wird, dass eine Skalierung des als Relation 30 zugrunde gelegten ersten Parabelastes 32 entlang der Abszisse erfolgt. Durch eine Skalierung der Abszisse ergibt sich über dieser für die durch den Pfeil 36 bezeichnete Position des Gaspedals 20 nicht mehr der durch den gestrichelten Pfeil 38 sondern der durch einen aufwärts gerichteten durchgezogenen Pfeil 42 bezeichnete Arbeitspunkt 44. Dieser entspricht hinsichtlich seiner Position über der Ordinate einem Arbeitspunkt 46 auf dem weiteren Parabelast 34, so dass die Skalierung der Abszisse, also z.B. die Skalierung der Position des Gaspedals 20 als Beispiel für eine Skalierung einer Position eines Stellelements 18, 22, auch als Skalierung des ersten Parabelastes 32 aufgefasst werden kann. Eine solche Skalierung des als Relation 30 fungierenden ersten Parabelastes 32 ergibt sich, indem dieser gestaucht wird, so dass sich eine Überlappung mit dem zweiten Parabelast 34 ergibt.

Weil der erste und der zweite Parabelast 32, 34 als Beispiel für im Stand der Technik bisher verwendete unterschiedliche Relationen 30 je nach Betriebszustand aufgefasst werden können, zeigt die obige Darstellung, dass der Ansatz gemäß der Erfindung gleichwertig zu dem bisher im Stand der Technik nach bestem Wissen der Anmelderin durchgängig verfolgten Ansatz ist und sich demgegenüber aber dadurch auszeichnet, dass lediglich die Daten einer Relation 30, also z.B. des ersten Parabelastes 32, im Speicher 17 zu hinterlegen sind, wohingegen für das vereinfachte Beispiel gemäß Fig. 3 beim Stand der Technik zumindest die Daten für den ersten und den zweiten Parabelast 32, 34 als dort zu verwendende unabhängige Relationen 30 abzuspeichern wären.

Eine Skalierung der Relation 30 muss sich dabei - wie oben beschrieben - nicht nur auf die Abszisse beziehen sondern kann sich zusätzlich oder alternativ auch auf die Ordinate beziehen. Die Skalierung muss darüber hinaus nicht linear sein, so dass z.B. bei einem eingelegten niedrigen Gang die Position des Gaspedals 20 direkt für den Abruf der Leistung beim Aggregat 10 und bei einem eingelegten höheren Gang die Position des Gaspedals 20 stets mit einem konstanten Faktor beaufschlagt wird.

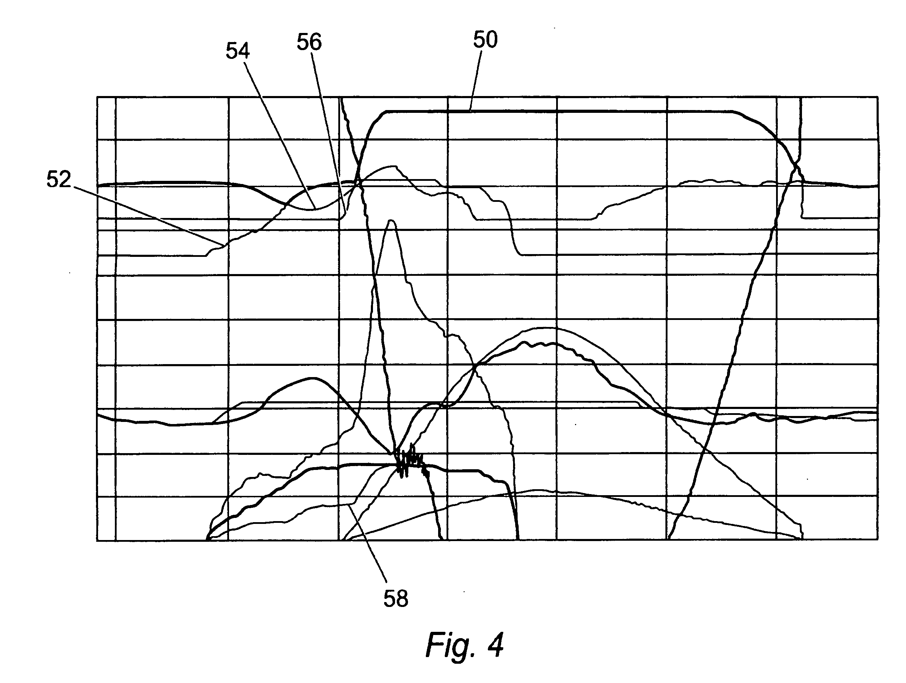

Gemäß der Erfindung ist nämlich in einer bevorzugten Ausführungsform vorgesehen, dass die anzuwendende Skalierung selbst eine Funktion eines oder mehrerer Parameter ist. Dies wird im Folgenden anhand von Fig. 4 weiter erläutert.

Fig. 4 zeigt unter anderem einen Graph 50 für ein Maß der Skalierung der Abszisse (Fig. 3) oder eines über der Abszisse aufgetragenen Signals bezüglich einer Position eines Stellelements 18, 22. Erkennbar ist, dass die Skalierung mit der in Fig. 4 über der Abszisse abgetragenen Zeit veränderlich ist. Die Skalierung oder der resultierende Graph 50 wird dabei zusammenfassend kurz mit PPM (Pedal Progression Multiplier) bezeichnet. Der Graph 50 ergibt sich gemäß den in Fig. 4 dargestellten Verhältnissen durch Kombination weiterer, insbesondere zeitveränderlicher Skalierungswerte, wobei in Fig. 4 ein Graph 52 für einen Skalierungswert in Bezug auf das Gaspedal 20, ein Graph 54 für einen Skalierungswert in Bezug auf eine Drehzahl des Motors 12, ein Graph 56 für einen Skalierungswert in Bezug auf einen Kupplungsschlupf und ein Graph 58 für einen Skalierungswert in Bezug auf eine Startfunktion dargestellt sind. Die Kombination der vorgenannten und eventueller weiterer Skalierungswerte kann dabei additiv, multiplikativ oder entsprechend einer sonst geeigneten, in der Funktionseinheit 16 hinterlegten Verknüpfung erfolgen. Der Graph 58 des Skalierungswerts in Bezug auf die Startfunktion ermöglicht dabei insbesondere eine Anpassung an ein beim Anfahren gewünschtes Ansprechverhalten. Durch Wahl des Graphen 58 kann dabei ein "aggressives" oder ein "moderates" Ansprechverhalten realisiert sein, wobei bei "aggressivem" Ansprechverhalten auch vergleichsweise geringe Betätigungen des Gaspedals 20 zu einem in Relation zur Betätigung des Gaspedals 20 vergleichsweise hohen Leistungsabruf beim Antriebsaggregat 10 führen.

### Bezugszeichenliste

- 10: Antriebsaggregat
- 12: Motor
- 14: Getriebe
- 16: Steuerungseinheit
- 17: Speicher
- 18: (erstes) Stellelement
- 20: Gaspedal
- 22: (weiteres) Stellelement; Tempomat
- 24: Stellsignal
- 26: Aktivierungssignal
- 28: Geschwindigkeitsmaß
- 30: Relation
- 32: (erster) Parabelast
- 34: (zweiter) Parabelast
- 36: Pfeil
- 38: Pfeil
- 40: Ordinatenwert
- 42: Pfeil
- 44: Arbeitspunkt
- 46: Arbeitspunkt
- 48: ---
- 50: Graph
- 52: Graph
- 54: Graph
- 56: Graph
- 58: Graph

## Patentansprüche

1. Verfahren zum Betrieb eines Antriebsaggregates (10) eines Kraftfahrzeugs mit einer Steuerungseinheit (16), wobei die Steuerungseinheit (16) zumindest eine Position eines Stellelements (18, 22) und ein Maß für eine Momentangeschwindigkeit - Geschwindigkeitsmaß (28) - des Kraftfahrzeugs erfasst,
wobei in einem der Steuerungseinheit (16) zugeordneten Speicher (17) zumindest eine Relation (30) zwischen der Position des Stellelements (18, 22) und dem Geschwindigkeitsmaß (28) einerseits und einem Maß für eine vom Aggregat (10) abgegebene Leistung andererseits hinterlegt ist,
wobei je nach Position des Stellelements (18, 22) und Geschwindigkeitsmaß (28) in Abhängigkeit von der im Speicher (17) hinterlegten Relation (30) eine Leistung des Aggregats (10) abgerufen wird,
**dadurch gekennzeichnet, dass**
für mindestens zwei unterschiedliche Betriebszustände des Aggregats (10) ein und dieselbe Relation (30) zugrunde gelegt wird und dass je nach Betriebszustand eine Skalierung der Relation (30) erfolgt.

2. Verfahren nach Anspruch 1,
wobei sich der Betriebszustand anhand unterschiedlicher Unter- oder Übersetzungsverhältnisse eines von dem Antriebsaggregat (10) umfassten Getriebes (14) und/oder anhand auswählbarer, vorgegebener oder vorgebbarer Betriebsarten ergibt.

3. Verfahren nach Anspruch 1 oder 2,
wobei als Skalierung eine multiplikative Skalierung vorgesehen ist.

4. Verfahren nach Anspruch 3,
wobei sich die multiplikative Skalierung auf die Position des Stellelements (18, 22) und/oder das Geschwindigkeitsmaß (28) bezieht.

5. Verfahren nach einem der vorangehenden Ansprüche, wobei für unterschiedliche, sich aus einer jeweiligen Position des Stellelements (18, 22) und einem jeweiligen Geschwindigkeitsmaß (28) ergebender Arbeitspunkte oder mit solchen Arbeitspunkten korrelierte Arbeitsbereiche unterschiedliche Skalierungen vorgesehen sind.

6. Verfahren nach einem der vorangehenden Ansprüche, wobei die Relation (30) und die jeweilige Skalierung in umgekehrter Reihenfolge angewandt wird um eine Sollposition des Stellelements (18, 22), insbesondere eine Sollposition eines Gaspedals (20) zu ermitteln.

7. Computerprogramm mit durch einen Computer, insbesondere eine Steuerungseinheit (16) zum Einsatz in einem Kraftfahrzeug, ausführbaren Programmcodeanweisungen zur Implementierung des Verfahrens nach einem der vorangehenden Ansprüche wenn das Computerprogramm auf einem Computer ausgeführt wird.

8. Computerprogrammprodukt, insbesondere Speichermedium, mit einem durch einen Computer, insbesondere eine Steuerungseinheit (16) zum Einsatz in einem Kraftfahrzeug, ausführbaren Computerprogramm gemäß Anspruch 7.

9. Steuerungseinheit für ein Antriebsaggregat (10) eines Kraftfahrzeugs mit Mitteln zur Erfassung zumindest einer Position eines Stellelements (18, 22) und eines Maßes für eine Momentangeschwindigkeit - Geschwindigkeitsmaß (28) - des Kraftfahrzeugs,
wobei in einem der Steuerungseinheit (16) zugeordneten Speicher (17) zumindest eine Relation (30) zwischen der Position des Stellelements (18, 22) und dem Geschwindigkeitsmaß (28) einerseits und einem Maß für eine vom Aggregat (10) abgegebene oder abgebbare Leistung andererseits hinterlegt ist,
wobei durch die Steuereinheit (16) in Abhängigkeit von der jeweiligen Position des Stellelements (18, 22) und dem Geschwindigkeitsmaß (28) anhand der im Speicher (17) hinterlegten Relation (30) eine Leistung des Aggregats (10) abrufbar ist,
**dadurch gekennzeichnet, dass**
die Leistung für mindestens zwei unterschiedliche Betriebszustände des Aggregats (10) aufgrund ein und derselben Relation (30) und einer Skalierung der Relation (30) in Abhängigkeit vom jeweiligen Betriebszustand abrufbar ist.

10. Steuerungseinheit nach Anspruch 9,
mit Mitteln zur Implementierung der Verfahrensschritte gemäß einem oder mehreren der Ansprüche 2 bis 6.

## Claims

1. A method of operating a power plant (10) of a motor vehicle with a controller (16), wherein said controller (16) detects at least one position of an actuator (18, 22) and a measure for a current speed - speed measure (28) - of said motor vehicle,
wherein at least one relation (30) between the position of said actuator (18, 22) and said speed measure (28) on the one hand and a measure for a power delivered by said plant (10) on the other hand is stored in a memory (17) associated with said controller (16),
wherein a power of said plant (10) is obtained depending on the position of said actuator (18, 22) and said speed measure (28) subject to said relation (30) stored in said memory (17),
**characterised in that**
one and the same relation (30) underlies at least two different operational states of said plant (10) and that a scaling of said relation (30) takes place depending on the operational state.

2. The method according to Claim 1,
wherein the operational state arises from different gear reduction or gear transmission ratios of a transmission (14) included by said power plant (10) and/or from selectable, predetermined or predeterminable operational modes.

3. The method according to Claim 1 or 2,
wherein a multiplicative scaling is provided for said scaling.

4. The method according to Claim 3,
wherein said multiplicative scaling relates to the position of said actuator (18, 22) and/or said speed measure (28).

5. The method according to any one of the previous claims,
wherein different scalings are provided for different operating points arising from a respective position of said actuator (18, 22) and a respective speed measure (28), or for operating ranges correlated with such operating points.

6. The method according to any one of the previous claims,
wherein said relation (30) and the respective scaling are applied in reverse order for determining a required position of said actuator (18, 22), in particular a required position of an accelerator pedal (20).

7. A computer program with program code instructions executable by a computer, in particular by a controller (16) for use in a motor vehicle, for implementing said method according to any one of the previous claims when the computer program is executed on a computer.

8. A computer program product, in particular a memory medium, having a computer program executable by a computer, in particular a controller (16) for use in a motor vehicle, according to claim 7.

9. A controller for a power plant (10) of a motor vehicle having means for detecting at least one position of an actuator (18, 22) and a measure for a current speed - speed measure (28) - of said motor vehicle,
wherein at least one relation (30) between the position of said actuator (18, 22) and said speed measure (28) on the one hand and a measure for a power delivered or deliverable by said plant (10) on the other hand is stored in a memory (17) associated with said controller (16),
wherein a power of said plant (10) is obtainable by said controller (16) subject to the respective position of said actuator (18, 22) and said speed measure (28) by means of said relation (30) stored in said memory (17),
**characterised in that**
the power is obtainable for at least two different operational states of said plant (10) on the basis of one and the same relation (30) and a scaling of said relation (30) subject to the respective operational state.

10. The controller according to claim 9, having means for implementing the steps of said method according to one or more of claims 2 to 6.

## Revendications

1. Procédé pour faire fonctionner un groupe d'entraînement (10) d'un véhicule automobile, comprenant une unité de commande (16), l'unité de commande (16) détectant au moins une position d'un actionneur (18, 22) et une mesure d'une vitesse instantanée - mesure de vitesse (28) - du véhicule automobile, au moins une relation (30) entre la position de l'actionneur (18, 22) et la mesure de vitesse (28) d'une part et une mesure d'une puissance délivrée par le groupe (10) d'autre part étant stockée dans une mémoire (17) associée à l'unité de commande (16), et selon la position de l'actionneur (18, 22) et la mesure de vitesse (28) en fonction de la relation (30) stockée dans la mémoire (17), une puissance du groupe (10) étant demandée, **caractérisé en ce que** pour au moins deux états de fonctionnement différents du groupe (10), une seule et même relation (30) est utilisée et **en ce qu'**en fonction de l'état de fonctionnement, on effectue une mise à l'échelle de la relation (30).

2. Procédé selon la revendication 1, dans lequel l'état de fonctionnement est obtenu à partir de différents rapports de démultiplication ou de multiplication d'une transmission (14) englobée par le groupe d'entraînement (10) et/ou à l'aide de types de fonctionnement sélectionnables, prédéfinis ou prédéfinissables.

3. Procédé selon la revendication 1 ou 2, dans lequel on prévoit en tant que mise à l'échelle, une mise à l'échelle multiplicative.

4. Procédé selon la revendication 3, dans lequel la mise à l'échelle multiplicative se rapporte à la position de l'actionneur (18, 22) et/ou à la mesure de vitesse (28).

5. Procédé selon l'une quelconque des revendications précédentes, dans lequel on prévoit des mises à l'échelle différentes pour différents points de travail résultant d'une position respective de l'actionneur (18, 22) et d'une mesure de vitesse respective (28), ou pour des plages de travail corrélées à de tels points de travail.

6. Procédé selon l'une quelconque des revendications précédentes, dans lequel la relation (30) et la mise à l'échelle respective sont appliquées en série inversée afin de détecter une position de consigne de l'actionneur (18, 22), notamment une position de consigne d'une pédale d'accélérateur (20).

7. Programme informatique avec des indications de code de programme pouvant être exécutées par un ordinateur, notamment une unité de commande (16) devant être utilisée dans un véhicule automobile, pour la mise en oeuvre du procédé selon l'une quelconque des revendications précédentes lorsque le programme informatique est exécuté sur un ordinateur.

8. Produit de programme informatique, notamment support de mémoire, comprenant un programme informatique selon la revendication 7, pouvant être exécuté par un ordinateur, notamment une unité de commande (16) devant être utilisée dans un véhicule automobile.

9. Unité de commande pour un groupe d'entraînement (10) d'un véhicule automobile, comprenant des moyens pour détecter au moins une position d'un actionneur (18, 22) et une mesure d'une vitesse Instantanée - mesure de vitesse (28) - du véhicule automobile, au moins une relation (30) entre la position de l'actionneur (18, 22) et la mesure de vitesse (28) d'une part et une mesure d'une puissance délivrée ou pouvant être délivrée par le groupe (10) d'autre part étant stockée dans une mémoire (17) associée à l'unité de commande (16), et en fonction de la position respective de l'actionneur (18, 22) et de la mesure de vitesse (28) à l'aide de la relation (30) stockée dans la mémoire (17), une puissance du groupe (10) pouvant être demandée par l'unité de commande (16), **caractérisée en ce que** la puissance peut être demandée pour au moins deux états de fonctionnement différents du groupe (10) sur la base d'une seule et même relation (30) et d'une mise à l'échelle de la relation (30) en fonction de l'état de fonctionnement respectif.

10. Unité de commande selon la revendication 9, comprenant des moyens pour mettre en oeuvre les étapes de procédé selon l'une quelconque ou plusieurs des revendications 2 à 6.
